# EUROPEAN PATENT APPLICATION

(11) **EP 1 440 646 A1**
(43) Date of publication of application: **28.07.2004**
(21) Application number: 04000911.0
(22) Date of filing: 16.01.2004
(51) Int. Cl.: A47J 37/07

(54) **Accessory for cooking food, particularly for cooking by means of a wood-burning hearth**

(30) Priority: 21.01.2003 IT VR20030006
(71) Applicant: Zanella, Roberto, 37060 S. Giorgio in Salici - Fraz. SONA (Prov. of Verona) (IT)
(72) Inventor: Zanella, Roberto, 37060 S. Giorgio in Salici - Fraz. SONA (Prov. of Verona) (IT)
(74) Representative: Modiano, Guido, Dr.-Ing.

(57) **Abstract**

An accessory (1) for cooking food, particularly for cooking by means of a wood-burning hearth, comprising a supporting structure (2) for at least one first cooking element (3) that is substantially flat and can be engaged by the food to be cooked on at least one of its faces. The supporting structure can be arranged proximate to a heat source in order to cook the food to be cooked. According to the invention, the first cooking element (3) is arranged so that its plane of arrangement is substantially vertical. There are also retention means in order to keep the food to be cooked engaged with the first cooking element (3).

## Description

The present invention relates to an accessory for cooking food, particularly for cooking by means of a wood-burning hearth.

As is known, food such as meat or vegetables is currently cooked on a hearth by using, even in homes, gridirons that are arranged horizontally above the coals in order to roast the food and are generally constituted by a frame that supports a grill that is commonly formed by intersecting metallic bars.

The use of the gridirons described above to cook food, however, entails drawbacks.

In fact, during gridiron cooking, quite often the food tends to bum rather than cook.

Accordingly, the use of gridirons forces the user to pay constant attention to cooking operations in order to prevent excessively rapid cooking or even burning, particularly, as occurs quite often, due to formation of flames caused by contact of the grease that drips from the food onto the coals.

Furthermore, the fall of grease or fatty condiments onto the underlying coals produces smoke and unpleasant odors that make the use of gridirons scarcely suitable for enclosed spaces such as domestic ones.

Spits are also known which can also be used to cook food in a hearth, but due to their space occupation and cost they are practically not available for the private market. Moreover, they cannot be used to cook all kinds of food.

The aim of the present invention is to obviate the drawbacks noted above in known types of gridirons and spits by providing an accessory for cooking food, particularly for cooking by means of a wood-burning hearth, that is capable of ensuring correct and uniform cooking of food even with limited intervention on the part of the operator.

Within this aim, an object of the present invention is to provide an accessory that can drastically reduce the risk of the food catching fire due to contact between the condiments and the coals or the fire in the hearth, accordingly giving extensive assurances of safety during its use.

Another object of the present invention is to provide an accessory that can be effectively used to cook even simultaneously various kinds of food, even of different origin, such as meat or vegetables.

Another object of the invention is to provide an accessory for cooking food that thanks to the particular method of use and manufacture can last much longer than conventional gridirons.

Another object of the invention is to provide an accessory for cooking food that allows to avoid, during cooking process, generation of unpleasant odors and smoke caused by contact of the grease and fat of food with the coals or the fire.

Another object of the present invention is to provide an accessory for cooking food that can be very easy and practical to use.

Another important object is to provide an accessory for cooking food, particularly for cooking by means of a wood-burning hearth, which allows to cook food with a limited addition of fatty condiments so that the food can be cooked in a healthful manner.

Another object of the present invention is to provide an accessory for cooking food, particularly for cooking by means of a wood-burning hearth, that can be constructively simple, compact, low in cost, so as to be competitive also from a merely economical standpoint.

This aim and these and other objects that will become better apparent hereinafter are achieved by an accessory for cooking food, particularly for cooking by means of a wood-burning hearth, according to the invention, which comprises a supporting structure for at least one first cooking element that is substantially flat and can be engaged by the food to be cooked, said supporting structure being arrangeable proximate to a heat source in order to cook said food to be cooked, characterized in that said at least one first cooking element is arranged so that its plane of arrangement is substantially vertical, retention means being provided in order to keep said food to be cooked engaged with said at least one first cooking element.

Further characteristics and advantages of the invention will become better apparent from the description of preferred but not exclusive embodiments of the accessory according to the invention, illustrated by way of non-limiting example in the accompanying drawings, wherein:
Figure 1 is a perspective view of the accessory according to the invention, arranged in the vicinity of a hearth;
Figure 2 is a perspective view of the accessory according to the invention;
Figure 3 is a front elevation view of the accessory according to the invention;
Figure 4 is a transverse sectional view of the accessory according to the invention;
Figure 5 is a side elevation view of a support and connection shaft;

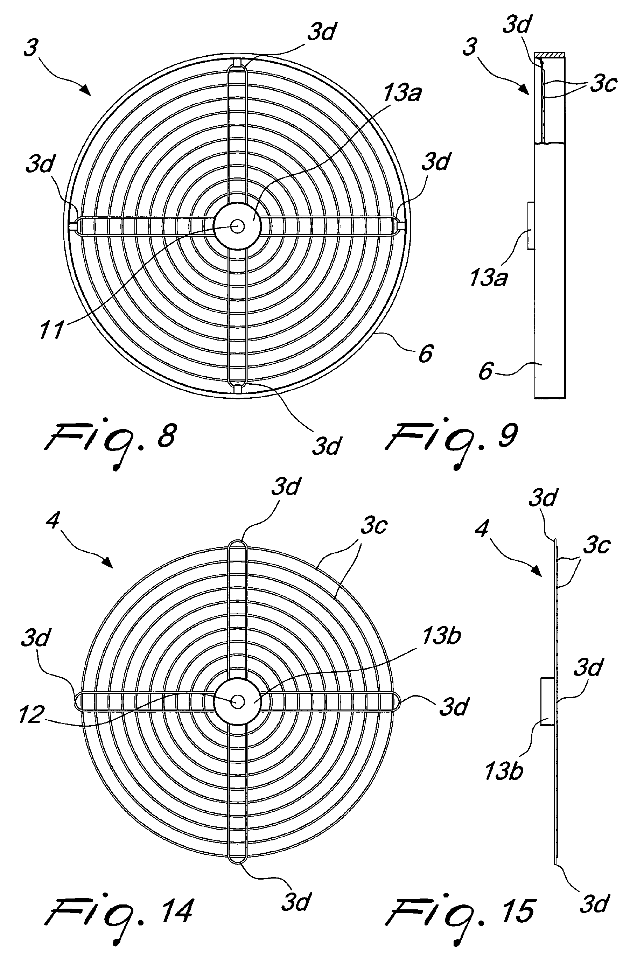

Figures 6 and 7 are respectively a front elevation view and a side elevation view of the first cooking element in a first embodiment;
Figures 8 and 9 are respectively a front elevation view and a partially cutout side elevation view of a second embodiment of the first cooking element;
Figures 10 and 11 are respectively a front elevation and a side elevation view of the first cooking element in a third embodiment;
Figures 12 and 13 are respectively a front elevation view and a side elevation view of a second cooking element in a first embodiment;
Figures 14 and 15 are respectively a front elevation view and a side elevation view of the second cooking element in a second embodiment;
Figures 16 and 17 are respectively a front elevation view and a side elevation view of the second cooking element in a third embodiment;

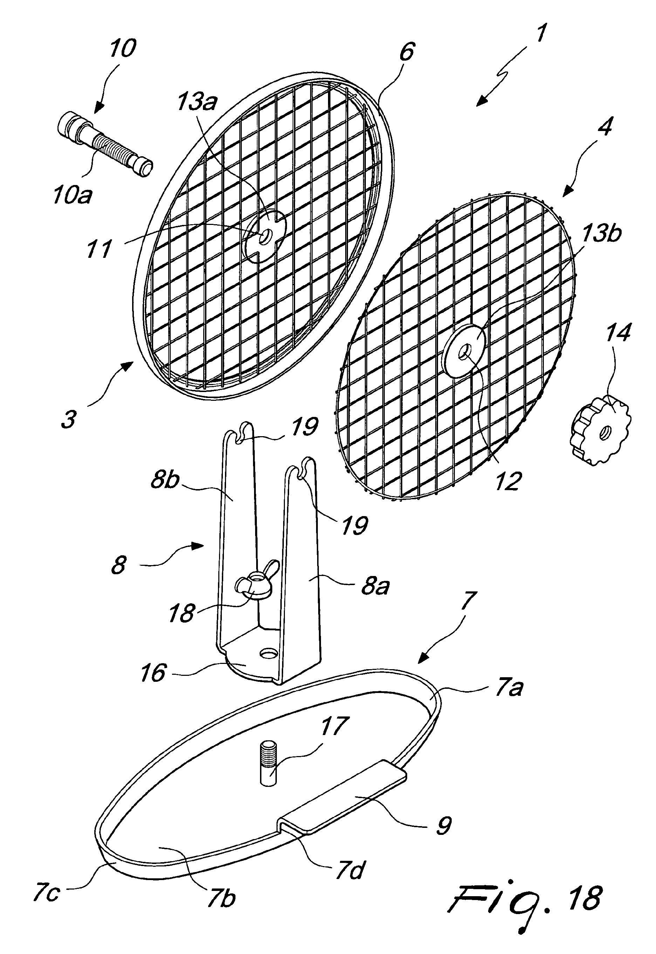

Figure 18 is an exploded perspective view of the accessory according to the invention.

In the examples of embodiments that follow, individual characteristics, given in relation to specific examples, may actually be interchanged with other different characteristics that exist in other examples of embodiments.

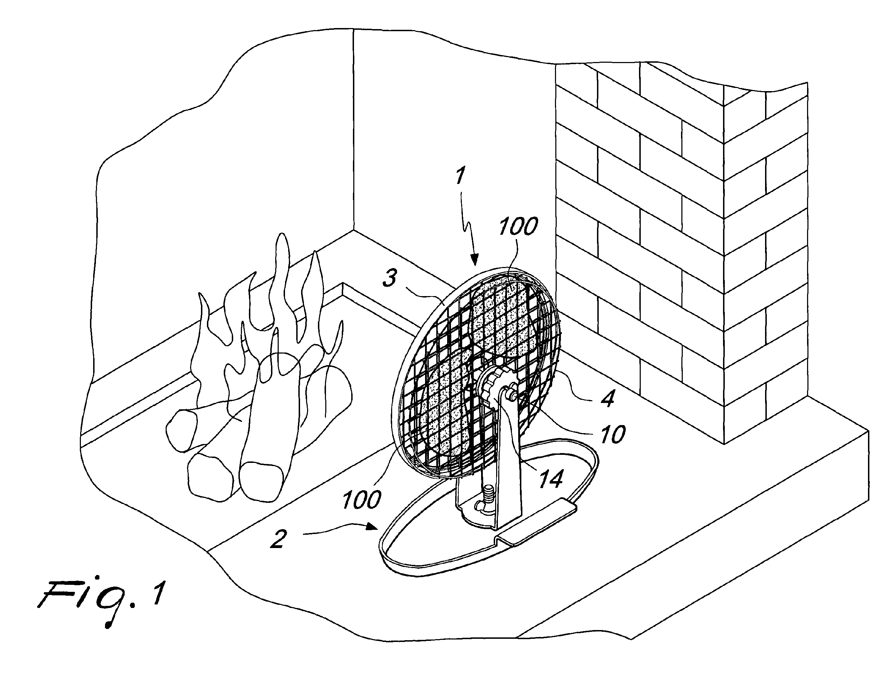

With reference to Figure 1, the accessory for cooking food, particularly for cooking by means of a wood-burning hearth, according to the invention, generally designated by the reference numeral 1, has a supporting structure 2 with which at least one first cooking element 3 is associated.

The first cooking element 3 is substantially flat and is designed to be engaged on at least one of its faces by the food 100 to be cooked.

It should be noted that by using the accessory according to the invention it is possible to cook separately or together food 100 of different kinds, such as for example meat or vegetables or other food according to the requirements. Preferably, the food 100 to be cooked with the accessory according to the invention is cut in slices, but it can also be cooked without having to resort to particular cuts.

Again with reference to Figure 1, it can be seen that the supporting structure 2 is designed to be positioned in the vicinity of a heat source in order to cook the food 100 to be cooked, and in particular it can be seen that the supporting structure 2 can be arranged within a fireplace, proximate to a hearth 200.

According to the invention, the first cooking element 3 is arranged so that its plane of arrangement is substantially vertical.

Also according to the invention, there are also retention means that allow to keep the food 100 to be cooked stably engaged with the first cooking element 3.

Advantageously, the first cooking element 3 can rotate on command with respect to the supporting structure 2 about a first rotation axis that is substantially horizontal.

Conveniently, furthermore, the first cooking element 3 can rotate on command with respect to at least one portion of the supporting structure 2 about a second rotation axis that is substantially vertical.

According to a preferred example of embodiment of the invention, such retention means are formed by a second cooking element 4, which is constructively similar to the first cooking element 3 and is designed to substantially face the first cooking element 3 and lie opposite thereto.

Advantageously, the retention means further comprise connection and clamping means 5 that connect one another the first cooking element 3 and the second cooking element 4.

In particular, the connection and clamping means 5 can be operated in order to move closer the first and second cooking elements 3 and 4, so as to stably clamp the food 100 to be cooked between the first and second cooking elements 3 and 4, as explained in greater detail hereinafter.

Preferably, the first cooking element 3 is constituted by a substantially disk-like body in which the axis coincides with the first rotation axis cited above.

It should be noted that the shape of the first cooking element 3 can be replaced, according to the requirements, with another suitable shape, such as for example an elliptical or square or rectangular shape and so forth.

Conveniently, at least one portion of the first cooking element 3 is grill-shaped.

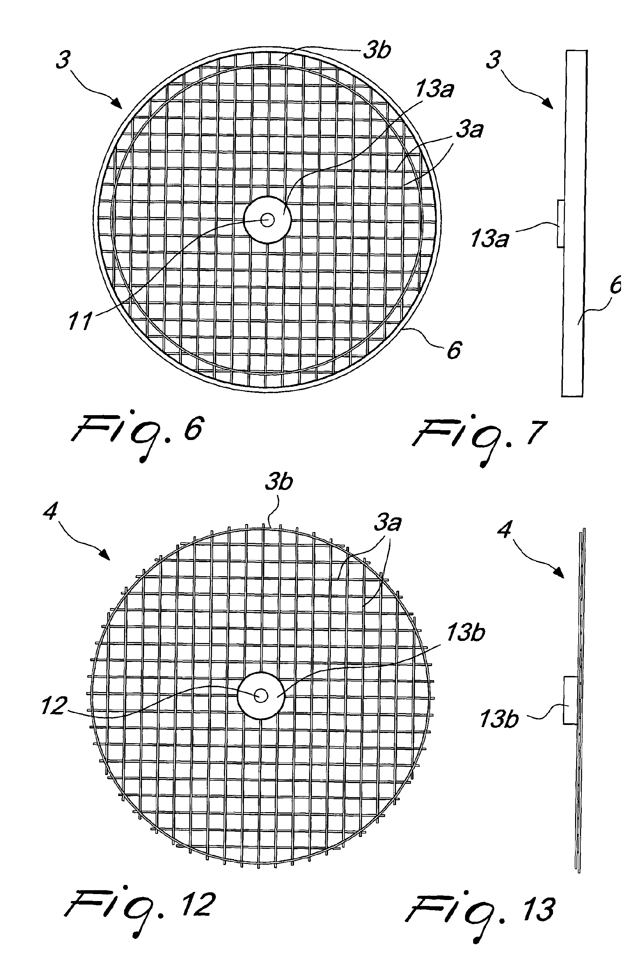

With reference to Figure 6, the grill-shaped portion can be constituted for example by a plurality of bars 3a that intersect along two perpendicular directions and are supported at their ends by an external circular collar 3b.

With reference instead to Figure 8, it can be seen that said grill-shaped portion can be provided, as an alternative, by a plurality of circular elements 3c that have different diameters and are arranged concentrically one inside the other. Such circular elements 3c are held together by two or more pairs of elongated rings 3d that are arranged radially.

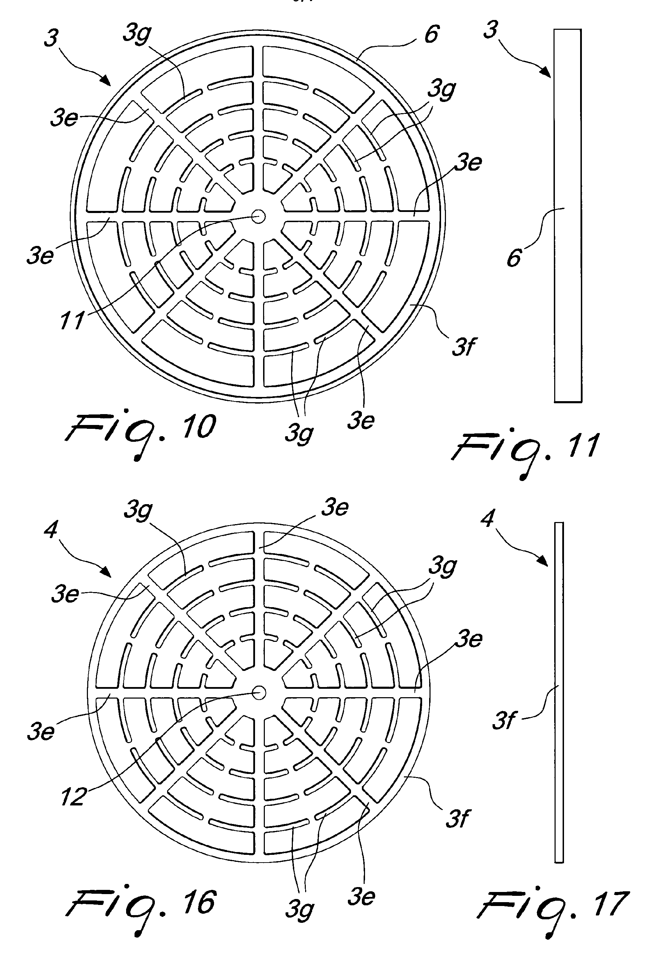

According to another embodiment, illustrated in Figure 10, the plate-shaped portion of the first cooking element 3 is formed by a plurality of rod-like elements 3e that are arranged in a radial pattern around the axis of the disk-like body of the first cooking element 3 and are connected by an external ring 3f. A plurality of arc-like elements 3g protrude laterally from each one of the rod-like elements 3e on opposite sides with respect to their axial extension and are co-planar with respect to the rod-like elements 3d and concentric along the axis of the disk-like body of the first cooking element 3. The arc-like elements 3e are spaced one another along the axial extension of the corresponding rod-like element 3e and their longitudinal extension increases gradually as their distance from the axis of the first cooking element 3 increases.

Advantageously, the second cooking element 4 is also at least partially grill-shaped and in particular, as shown in Figures 12, 14 and 16, the grill-shaped portion of the second cooking element 4 can be provided for example in a manner similar to the one described for the first cooking element 3.

Another embodiment (not shown) of the first cooking element 3, which by analogy can also be used for the second cooking element 4, has a first cooking element 3 that is at least partially plate-shaped, i.e., has at least one portion that is constituted by a plate-like element that is optionally provided, at least on its face designed to be touched by the food 100 to be cooked, with raised ridges so as to provide a gridiron-like surface.

Advantageously, the first cooking element 3 is provided with a peripheral lateral containment rim 6, which is designed to prevent the food 100 to be cooked, which is interposed between the first and second cooking elements 3 and 4, from escaping laterally from the gap delimited by the first and second cooking elements 3 and 4, if for example the clamping to which the food 100 is subjected by the first and second cooking elements 3 and 4 by way of the connection and clamping means 5 accidentally loosens.

It is optionally possible to provide the second cooking element 4 also with a peripheral rim in order to ensure safer lateral containment of the food 100 to be cooked.

Conveniently, the supporting structure 2 is formed by a supporting base 7, on which a supporting element 8 is mounted so that it can rotate about said second rotation axis, the first cooking element 3 being associated with the supporting element.

Advantageously, on the supporting base 7 there is a recess 7a that at least partially lies below the first cooking element 3 so that liquids that percolate from the food 100 being cooked, such as for example grease or condiments, can be collected inside said base, accordingly preventing them from spreading and for example dirtying the surface of the fireplace where the accessory according to the invention is located.

More specifically, the supporting base 7, in the embodiment shown in the figures, is constituted by a plate-like body 7b that has for example a substantially ellipsoidal shape and advantageously has an extension that is sufficient to ensure the stability that is required in order to avoid accidental tipping of the accessory according to the invention. Conveniently, the plate-like body 7b is provided peripherally with a raised edge 7c that laterally delimits the recess 7a, the bottom of which is formed by said plate-like body 7b.

In particular, on the raised edge 7c there is a protruding portion 7d that protrudes upward with respect to the remaining part of the raised edge 7c and has, at the upper end of its outer lateral surface, a tab 9 that protrudes outwardly and acts as a handle for the supporting base 7, so as to allow its easy handling.

Advantageously, the connection and clamping means 5 comprise a support and connection shaft 10, which is associated, so that it can rotate about its own axis, with the supporting element 8 substantially at its ends.

In greater detail, the first cooking element 3 and the second cooking element 4 are associated with the shaft 10, and in particular the shaft 10 is arranged so that it defines, with its own axis, the first rotation axis of the first cooking element 3.

Conveniently, the shaft 10 passes through a through opening 11 that is formed in a substantially axial region of the first cooking element 3 and engages, by crossing it, a central hole 12 that is formed in the second cooking element 4, so that the second cooking element 4 is coupled in order to be slideable along the axial extension of the shaft 10.

With reference to the examples of embodiment of the first cooking element 3 shown in Figures 6 and 12 and with reference to the examples of embodiment of the second cooking element 4 shown in Figures 8 and 14, it can be noticed in particular that the through opening 11 and the central hole 12 are formed respectively in washers 13a and 13b that have for example a disk-like shape and are fixed to the grill-shaped portion of the first and second cooking elements 3 and 4 respectively, at a substantially central region thereof. Optionally, the washers 13a and 13b can have an axial extension, so that they protrude from the plane of arrangement of the first and second cooking elements 3 and 4 in order to give greater stability to the coupling of the first and second cooking elements 3 and 4 to the shaft 10, in that they limit the possibility of rotation of the first and second cooking elements 3 and 4 about axes that are substantially perpendicular to the axis of the shaft 10.

Conveniently, the connection and clamping means 5 further comprise a clamping element 14 that is crossed by a threaded hole that can be coupled to a threaded portion 10a that is provided on the shaft 10 and is arranged at least in the region of the shaft 10 that substantially can be affected by the second cooking element 4 in its various positions with respect to the shaft 10.

The clamping element 14 can be operated in order to clamp the food to be cooked between the first and second cooking elements 3 and 4. More specifically, the clamping element 14 can be screwed onto the threaded portion 10a toward the first cooking element 3 and is meant, upon clamping, to rest against an abutment region formed on the face of the second cooking element 4 that lies opposite the face that is directed toward the first cooking element 3, for example at the washer 13b, and to act by pushing on the second cooking element 4 so as to move the second cooking element 4 toward the first cooking element 3.

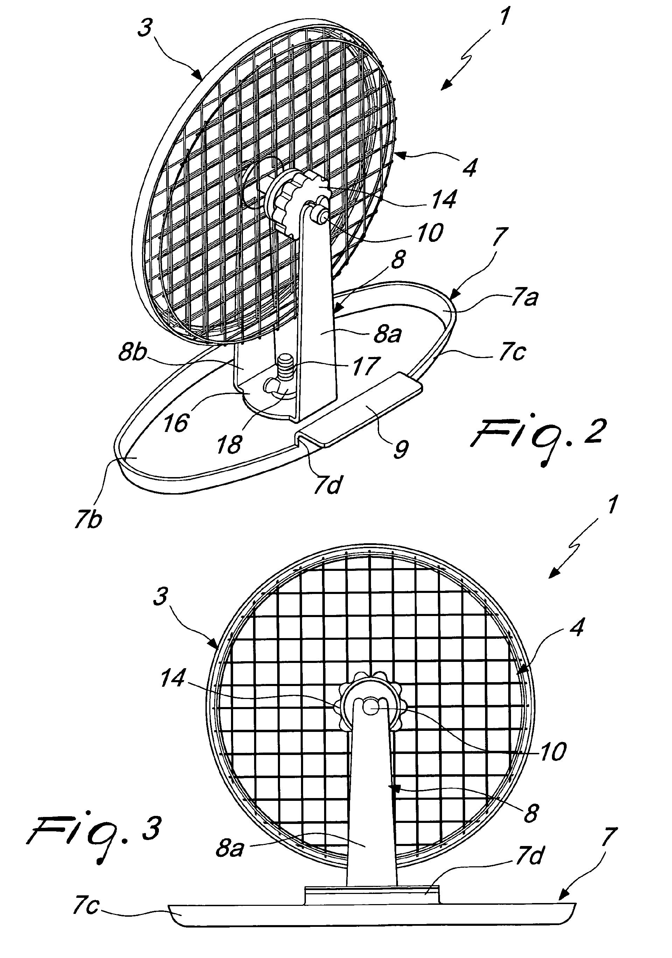

By way of example, the clamping element 14 can be constituted by an internally threaded annular element provided with an external actuation ring, as shown in particular by Figures 2, 3 and 4, or by a nut with grip wings.

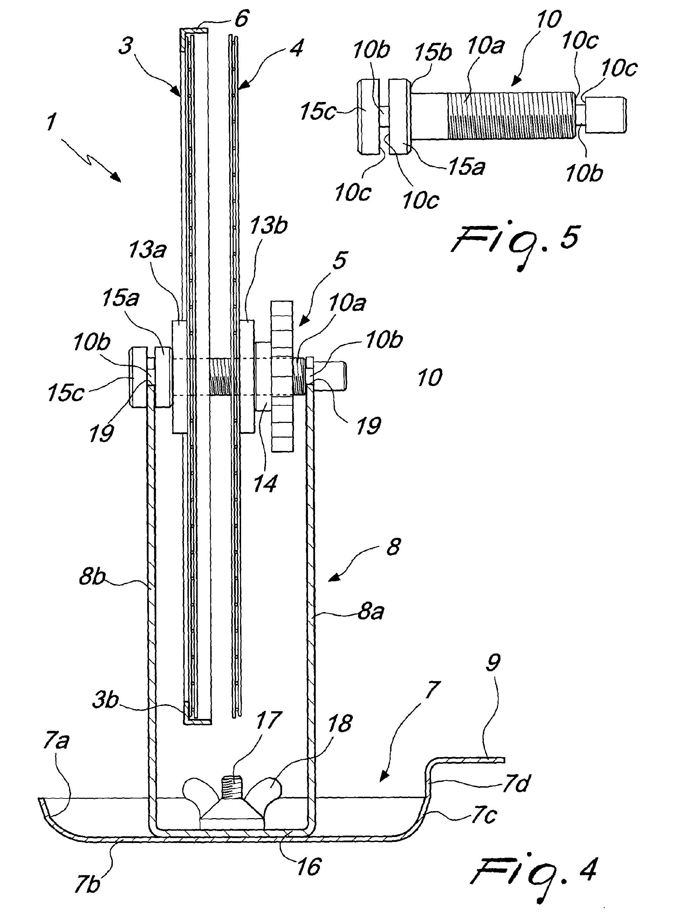

Conveniently, the first cooking element 3 can be connected rigidly, for example by welding, to the shaft 10, or according to a variation can be fitted so that it can slide along the axial extension of the shaft 10, and in this case, as shown by Figure 5, a shoulder 15b is formed on the shaft 10 by way of a radial expansion 15a and is designed to abut against a portion of the surface of the first cooking element 3 that lies opposite the portion that is directed toward the second cooking element 4 and is formed for example by the washer 13a. Again according to this variation, by screwing the clamping element 14 onto the threaded portion 10a it is possible to clamp the first and second cooking elements 3 and 4 between said clamping element 14 and the radial expansion 15. Therefore, once the food 100 to be cooked has been prepared between the first and second cooking elements 3 and 4, the clamping of the clamping element 14 onto the threaded portion 10a allows to squeeze the food 100 to be cooked between the first and second cooking elements 3 and 4 and to rigidly couple them to the first and second cooking elements 3 and 4 and with them to the shaft 10 in its ability to rotate about its own axis, particularly by way of the tight friction contact that is produced between the food 100 to be cooked and the first and second cooking elements 3 and 4 and between the shoulder 15b and the first cooking element 3.

A possible embodiment, not shown in the figures, further provides the shaft 10, at least in the region of its extension that is designed to couple to the first cooking element 3, with an axial portion that has, in transverse cross-section, a non-circular shape (for example a square, hexagonal, splined or other suitable shape). Said axial portion passes through the through opening 11, which is shaped correspondingly, so as to allow the first cooking element 3 to slide with respect to the shaft 10 along said axial portion but not allow the rotation of the first cooking element 3 with respect to the shaft 10 about its longitudinal axis.

Advantageously, the supporting element 8 is extended mainly vertically and has, in a downward region, a base that is constituted by a disk 16 that lies on a substantially horizontal plane and rests with its lower face on the upper surface of the supporting base 7 that is formed in practice by the upper face of the plate-like body 7b.

Conveniently, a rotation pivot 17 protrudes from the upper surface of the supporting base 7, is orientated substantially vertically and rotatably engages a rotation seat that is formed on the disk 16, so as to allow on command to rotate the disk 16 and therefore the supporting element 8 with respect to the supporting base 7 about the rotation pivot 17.

In practice, the rotation pivot 17 forms, by way of its own axis, the second rotation axis about which the first cooking element 3 can perform an angular movement.

Advantageously, locking means are provided which allow to block the possibility of rotation of the supporting element 8, and therefore of the first cooking element 3, about the rotation pivot 17 with respect to the supporting base 7.

Preferably, such locking means are provided by making said rotation seat pass through the disk 16 and by making the rotation pivot 17 pass through the rotation seat in order to exit with its free end from the upper face of the disk 16.

Conveniently, the rotation pivot 17 has, substantially at its free end, a threaded region that is coupled to a locking nut 18, which is provided for example with actuation wings and is designed to abut against an abutment region formed on the upper face of the disk 16 around the rotation seat.

Substantially, the locking nut 18 can be tightened by screwing along the threaded region of the rotation pivot 17 toward the supporting base 17 so as to clamp the disk 16 between the upper surface of the supporting base 17 and said locking nut 18, accordingly stably blocking the possibility of rotation of the supporting element 8 with respect to the supporting base about the rotation pivot 17.

Preferably, the supporting element 8 has two supporting posts 8a and 8b that are rigidly connected to the disk 16 and are laterally spaced on mutually opposite sides with respect to the rotation pivot 17.

In particular, the supporting posts 8a and 8b rotatably support a respective axial end of the shaft 10. More specifically, each post has, at its top, a cradle 19 that is designed to accommodate rotatably a respective axial end of the shaft 10. Advantageously, each cradle 19 is open on one side, for example the upper side, such as to form a passage through which it is possible to pass the axial ends of the shaft 10 in order to easily couple and uncouple them with respect to the supporting posts 8a and 8b.

Conveniently, in order to prevent the axial sliding of the shaft 10 with respect to the supporting posts 8a and 8b, the shaft 10 has annular grooves that are located substantially at its axial ends. Each one of the annular grooves forms a portion 10b that has a reduced diameter and can be accommodated in a respective cradle 19 and forms two opposite axial shoulders 10c that are designed to abut, on opposite sides, against a respective supporting post 8a or 8b in order to prevent or at least limit the possibility of axial sliding of the shaft 10 with respect to the supporting posts 8a and 8b.

As shown in the figures, at one end of the shaft 10 the portion 10b having a reduced diameter can be arranged between a head expansion 15c and the radial expansion 15a, and the opposite axial shoulders 10c can be formed by the faces of the head expansion 15c and of the radial expansion 15a that are directed toward the portion 10b having a reduced diameter.

According to a preferred embodiment, the second cooking element 4 and optionally also the first cooking element 3 are detachably associated with the shaft 10.

In particular, the first and second cooking elements can be uncoupled from the shaft 10 by sliding them off one axial end of the shaft 10, while their sliding off the opposite axial end of the shaft 10 is prevented by a retention element, constituted for example by the radial expansion 15.

Advantageously, the shaft 10 can be connected functionally to an actuation element that allows to easily turn the shaft 10 about its own axis. Such actuation element can be constituted by the clamping element 14, which as shown in the figures can be shaped like a knob or, according to a variation that is not shown, by a crank that is connected to one end of the shaft 10.

According to another variation, also not shown, the shaft 10 can be functionally connected to motor means, constituted for example by an electric motor, for turning it about its own axis.

It should be noted that it is possible to associate with the supporting element 8 one or more first cooking elements 3 that are arranged for example along the vertical extension of the supporting posts 8a and 8b.

It is further possible to associate with the supporting base 7 a plurality of supporting elements 8 that are arranged for example side by side, each supporting element advantageously being able to support one or more first cooking elements 3.

Preferably, the accessory according to the invention is entirely made of steel, conveniently of the type suitable for contact with food. Advantageously, the first and second cooking elements 3 and 4 can be coated at least partially with non-stick material.

Use of the accessory according to the invention is as follows.

When the shaft 10 is uncoupled from the supporting element 8, the food 100 to be cooked is arranged between the first and second cooking elements 3 and 4.

Preferably but not necessarily, the food 100 is prepared beforehand so that it is cut in slices for better cooking. Thus, for example, by using the accessory according to the invention it is possible to cook slices of meat or sliced vegetables and therefore obtain traditional grilled steaks or vegetables.

By operating the clamping element 14, the food 100 to be cooked is clamped between the first and second cooking elements 3 and 4 and said elements, together with the food 100 to be cooked, are rigidly coupled to the shaft 10, as explained above.

The axial ends of the shaft 10 are then rested on the supporting posts 8a and 8b in particular by inserting the portions 10b having a reduced diameter in the respective cradles 19.

The accessory thus provided can be positioned within a fireplace at a preset distance from the hearth 200.

During cooking, by acting for example on the actuation element 20, it is possible to turn the shaft 10 about its own axis, consequently turning the first cooking element and with it the food 100 to be cooked about the first rotation axis.

By way of the rotation about the first rotation axis it is possible to vary the position of the food 100 to be cooked with respect to the supporting base 7, obtaining in particular a greater or smaller spacing of the food 100 to be cooked from the supporting base 7. This possibility to raise or lower the food 100 to be cooked with respect to the supporting base 7 allows in practice to position the food 100 to be cooked, according to the requirements and the state of progress of its cooking process, in regions of the fireplace that are at a different height with respect to the hearth 200 and accordingly have different temperature levels.

If the shaft 10 can be rotated by motor means, the first cooking element 3 can be turned continuously or intermittently about the first rotation axis, obtaining an operating mode similar to a rotating grill.

Furthermore, by way of rotation about the second rotation axis, it is possible to cook simply and quickly on two opposite sides the food 100 to be cooked.

Again by way of the angular movement allowed about the second rotation axis, it is also possible to orientate the food 100 to be cooked with respect to the hearth 200 so that it is possible to vary the exposure of one region of its surface to the heat source. This allows to adjust the cooking method and time of the food 100.

Rotation about the second rotation axis in fact allows the angular movement of the first cooking element 3 between a first position, in which the food 100 to be cooked is arranged with one side substantially facing the heat source, for maximum exposure of said side to the heat source constituted by the hearth 200 (as shown in Figure 1), and a second position, in which the heat source is arranged laterally to said food 100 with respect to said side, so that said side has minimum exposure to the heat source.

Once the orientation of the first cooking element 3 with respect to the heat source that is most suitable for cooking has been chosen by rotating said element about the second rotation axis, such orientation can be locked by operating the locking means and in particular by tightening the locking nut 18.

Once cooking is complete, the food 100 is removed by disengaging the shaft 10 from the posts 8a and 8b so as to perform the subsequent maneuvers in complete safety away from the hearth 200.

The subsequent maneuvers entail unscrewing the clamping element 14 in order to allow the mutual spacing of the first and second cooking elements 3 and 4 and therefore allow to release the food 100 from the clamping performed by the first and second cooking elements 3 and 4.

It should be noted that the accessory according to the invention has been described with particular reference to its application to a fireplace; however, it can be used to cook food by using heat sources other than fire, such as electric heaters or heaters of another type provided for example within an electric oven or the like.

All the characteristics of the invention cited above as advantageous, convenient or the like may also be omitted or replaced by equivalents.

The invention thus conceived is susceptible of numerous modifications and variations, all of which are within the scope of the inventive concept.

Thus, for example, the retention means can be constituted as an alternative by a plurality of pointed elements that protrude from the face of the first cooking element 3 that is designed to be engaged by the food 100 to be cooked, said pointed elements piercing the food 100 to be cooked so as to keep it engaged with the first cooking element 3.

In practice it has been found that in all its embodiments the invention has achieved the intended aim and objects, and in particular the fact is stressed that use of the accessory according to the invention allows to avoid the emission of smoke and odors and to drastically reduce the risk that the food may catch fire, since the grease and fat that drips off the food does not fall onto the coals and onto the fire.

Furthermore, it has been found during practical use of the invention that the rotations allowed to the first cooking element about the first and second rotation axes ensure, both individually and in combination with each other, perfect and uniform cooking of the food without burning and with limited intervention on the part of the operator.

Moreover, an advantage achieved with the accessory according to the invention consists of the fact that during cooking it is not necessary to act directly on the food to turn it over or change its position: it is sufficient to turn the first cooking element about the first and/or second rotation axes, and this is done moreover from a position that is far from the fire and therefore the risk of scalding is also avoided.

Another advantage that can be observed arises from the fact that the accessory according to the invention can be used immediately after lighting the fire, since the food is not necessarily cooked with the aid of the coals but directly by means of the presence of the heat source provided by the fire.

Furthermore, the accessory according to the invention, structured in the manner described above, can be easily disassembled completely and is therefore washable even in a dishwasher.

Moreover, the invention has demonstrated a longer life than conventional gridirons, since it never makes direct contact with the fire.

In practice, the materials used, so long as they are compatible with the contingent use, as well as the shapes and dimensions, may be any according to requirements.

All the details may further be replaced with other technically equivalent ones.

The disclosures in Italian Patent Application no. VR2003A000006, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An accessory for cooking food, particularly for cooking by means of a wood-burning hearth, comprising a supporting structure for at least one first cooking element that is substantially flat and can be engaged by the food to be cooked on at least one of its faces, said supporting structure being arrangeable proximate to a heat source in order to cook said food to be cooked, **characterized in that** said at least one first cooking element is arranged so that its plane of arrangement is substantially vertical, retention means being provided in order to keep said food to be cooked engaged with said at least one first cooking element.

2. The accessory for cooking food according to claim 1, **characterized in that** said at least one first cooking element can rotate on command with respect to said supporting structure about a first substantially horizontal rotation axis.

3. The accessory for cooking food according to one or more of the preceding claims, **characterized in that** said at least one first cooking element can rotate on command with respect to at least one portion of said supporting structure about a second substantially vertical rotation axis.

4. The accessory for cooking food according to one or more of the preceding claims, **characterized in that** said retention means comprise a second cooking element that is designed to be arranged so that it substantially faces said at least one first cooking element and is opposite thereto, said retention means comprising connection and clamping means that connect said at least one first cooking element and said second cooking element, said connection and clamping means being actuatable in order to move closer said at least one first cooking element and said second cooking element in order to clamp said food to be cooked between said at least one first cooking element and said second cooking element.

5. The accessory for cooking food according to one or more of the preceding claims, **characterized in that** said at least one first cooking element is at least partially grill-shaped.

6. The accessory for cooking food according to one or more of the preceding claims, **characterized in that** said second cooking element is at least partially grill-shaped.

7. The accessory for cooking food according to one or more of the preceding claims, **characterized in that** said at least one first cooking element is at least partially plate-shaped.

8. The accessory for cooking food according to one or more of the preceding claims, **characterized in that** said second cooking element is at least partially plate-shaped.

9. The accessory for cooking food according to one or more of the preceding claims, **characterized in that** said first cooking element has a peripheral rim for lateral containment of said food to be cooked.

10. The accessory for cooking food according to one or more of the preceding claims, **characterized in that** said second cooking element has a peripheral rim for lateral containment of said food to be cooked.

11. The accessory for cooking food according to one or more of the preceding claims, **characterized in that** said supporting structure comprises a supporting base that supports at least one supporting element for said at least one first cooking element, said at least one supporting element being associated with said supporting base so that it can rotate about said second rotation axis.

12. The accessory for cooking food according to one or more of the preceding claims, **characterized in that** a recess for collecting the liquids that percolate from the cooked food is formed in said supporting base and lies at least partially below said at least one first cooking element.

13. The accessory for cooking food according to one or more of the preceding claims, **characterized in that** said supporting base comprises a grip tab.

14. The accessory for cooking food according to one or more of the preceding claims, **characterized in that** said connection and clamping means comprise a support and connection shaft that is mounted so that it can rotate on said at least one supporting element and supports said first cooking element and said second cooking element, said shaft defining said first rotation axis with its own axis.

15. The accessory for cooking food according to one or more of the preceding claims, **characterized in that** said second cooking element is supported by said shaft so that it can move along said shaft, said connection and clamping means comprising a clamping element that can be screwed onto a threaded portion formed on said shaft, said clamping element acting on the side of said second cooking element that lies opposite the side directed toward said first cooking element in order to move said second cooking element toward said at least one first cooking element.

16. The accessory for cooking food according to one or more of the preceding claims, **characterized in that** said at least one first cooking element is associated so that it can slide along the axial extension of said shaft, a shoulder being formed on said shaft and being designed to abut against a portion of the surface of said at least one cooking element that lies opposite the one directed toward said second cooking element, said clamping element being clampable onto said threaded portion of said shaft toward said at least one first cooking element in order to squeeze, between said shoulder and said clamping element, said at least one first cooking element and said second cooking element, with said food to be cooked interposed between said at least one first cooking element and said second cooking element.

17. The accessory for cooking food according to one or more of the preceding claims, **characterized in that** it comprises a rotation pivot that protrudes from the upper surface of said supporting base and forms with its own axis said second rotation axis, said at least one supporting element comprising a lower base that can engage by resting thereon the upper surface of said supporting base, said rotation pivot rotatably engaging a rotation seat that is formed on said lower base, means for locking the rotation of said at least one supporting element about said rotation pivot being provided.

18. The accessory for cooking food according to one or more of the preceding claims, **characterized in that** said lower base of said at least one supporting element comprises a disk that engages by resting thereon, with its lower face, the upper surface of said supporting base, said disk being crossed by said rotation seat, said rotation pivot passing through said rotation seat and protruding with its free end from the upper face of said disk, said locking means comprising a threaded region of said rotation pivot that can engage a locking nut that abuts against the upper face of said disk.

19. The accessory for cooking food according to one or more of the preceding claims, **characterized in that** said at least one supporting element comprises two supporting posts that are rigidly associated with said disk and are laterally spaced on opposite sides with respect to said second rotation axis, said pair of supporting posts supporting a respective axial end of said shaft so that it can rotate.

20. The accessory for cooking food according to one or more of the preceding claims, **characterized in that** each one of said supporting posts has, at its top, a cradle that is open on one side and can be engaged by a respective axial end of said shaft so as to allow rotation.

21. The accessory for cooking food according to one or more of the preceding claims, **characterized in that** said shaft comprises, at each axial end, an annular groove that forms a portion that has a reduced diameter and can be accommodated in a respective cradle and two opposite axial shoulders that are designed to abut, on opposite sides, against the corresponding supporting post.

22. The accessory for cooking food according to one or more of the preceding claims, **characterized in that** said supporting structure can be positioned within a hearth of a fireplace.
